# EUROPÄISCHE PATENTSCHRIFT

(11) **EP 3 280 634 B1**
(45) Veröffentlichungstag und Bekanntmachung des Hinweises auf die Patenterteilung: **18.12.2019**
(21) Anmeldenummer: 16710398.5
(22) Anmeldetag: 17.03.2016
(51) Int. Cl.: B62D 21/11

(54) **ZWEISPURIGES FAHRZEUG**
TWO-TRACK VEHICLE
VÉHICULE À DEUX TRACES

(30) Priorität: 04.04.2015 DE 102015004465
(43) Veröffentlichungstag der Anmeldung: 14.02.2018
(73) Patentinhaber: Audi AG, 85045 Ingolstadt (DE)
(72) Erfinder: KRAMER, Tobias, 85134 Stammham (DE); THAYSEN, Oliver, 85045 Ingolstadt (DE); NEESS, Tobias, 85049 Ingolstadt (DE)
(86) Internationale Anmeldenummer: PCT/EP2016/000481
(87) Internationale Veröffentlichungsnummer: WO 2016/162108

(56) Entgegenhaltungen:
- EP-A1- 2 048 063
- EP-A2- 2 457 807
- DE-A1-102006 013 550
- DE-A1-102008 063 448
- DE-T5-112011 102 185
- DE-T5-112012 005 306
- DE-T5-112013 001 681
- US-A1- 2014 110 925

## Beschreibung

Die Erfindung betrifft ein zweispuriges Fahrzeug nach dem Oberbegriff des Patentanspruches 1.

Die Karosseriestruktur eines Kraftfahrzeuges ist so auszulegen, dass im normalen Fahrbetrieb dynamische Steifigkeitsanforderungen (zum Beispiel bei einer Kurvenfahrt eine Torsionssteifigkeit um eine Fahrzeugmittellängsachse) erfüllt sind. Zudem ist die Karosseriestruktur so auszulegen, dass in einem Crashfall die Aufprallkräfte weitgehend deformationsfrei in die Karosseriestruktur einleitbar sind.

Aus der DE 10 2006 013 550 A1 ist ein gattungsgemäßes Fahrzeug bekannt, das als Fahrwerksaufhängung einen Vorderachshilfsrahmen aufweist, der an seitlichen Karosserielängsträgern angebunden ist. Das Fahrzeug weist zudem als eine Antriebsaggregate-Lagerungskomponente einen Tunnelquerträger auf. Dieser ist in einer Fahrzeuglängsrichtung um einen Längsversatz vom Hilfsrahmen beabstandet und überbrückt in der Fahrzeugquerrichtung einen karosserieseitigen Mitteltunnel. Der Hilfsrahmen sowie der Tunnelquerträger bilden gemeinsam eine Abstützbasis, auf der ein Antriebsaggregat des Fahrzeugs über Lagerstellen abstützbar ist, zum Beispiel in einer Dreipunktlagerung.

Bei dem in der DE 10 2006 013 550 A1 beschriebenen Fahrzeug-Vorderwagen sind die Fahrwerksaufhängung (das heißt der Hilfsrahmen) und die Aggregate-Lagerungskomponente (das heißt der Tunnelquerträger) voneinander beabstandet und kräftemäßig entkoppelt zueinander ausgeführt, das heißt nicht kraftübertragend miteinander verbunden. Dadurch ergibt sich generell eine aufgelöste Anordnung von Hilfsrahmen und weiteren, die Fahrzeugkarosserie aussteifenden Tragstrukturen. Diese aufgelöste Anordnung kann lediglich in reduziertem Maße die Steifigkeitsanforderungen an die Fahrzeugkarosserie erfüllen.

Aus der DE 11 2008 003 307 T5 ist ein weiteres Fahrzeug bekannt, bei dem ein Tunnelquerträger über eine Strebenanordnung kraftübertragend mit den vorderen Karosserielängsträgern verbunden ist. Im Crashfall bildet sich somit ein zusätzlicher Lastpfad, der sich an der Anbindungsstelle zwischen den Karosserielängsträgern und der Strebenanordnung abgabelt und über den Tunnelquerträger weiter zu den Tunnellängsträgern führt.

Die Aufgabe der Erfindung besteht darin, ein Fahrzeug bereitzustellen, bei dem in einfacher Weise die oben angegebenen Steifigkeitsanforderungen erfüllt werden können.

Die Aufgabe ist durch die Merkmale des Patentanspruches 1 gelöst. Bevorzugte Weiterbildungen der Erfindung sind in den Unteransprüchen offenbart.

Die Erfindung beruht auf dem Sachverhalt, dass im Stand der Technik die Fahrwerksaufhängungen (das heißt zum Beispiel der Hilfsrahmen) und die Aggregate-Lagerungskomponenten voneinander funktionell entkoppelt sind, wodurch keine Kräfte übertragen werden können, was im Hinblick auf eine Steifigkeitserhöhung nachteilig ist. Vor diesem Hintergrund ist gemäß dem kennzeichnenden Teil des Patentanspruches 1 ein Zwischenkopplungselement bereitgestellt, das unter Überbrückung eines Längsversatzes zwischen dem Hilfsrahmen und dem Tunnelquerträger kraftübertragend angeordnet ist. Auf diese Weise ergibt sich in dynamischen Fahrsituationen oder im Crashfall ein zusätzlicher Lastpfad, der Kräfte von der Fahrwerksaufhängung (das heißt vom Hilfsrahmen) zur Aggregate-Lagerungskomponente überträgt.

Der Kern der Erfindung beruht also allgemein darauf, die vorderen Aufhängungsstrukturen kraftübertragend mit den tragenden Bodengruppenabschnitten der Fahrzeugkarosserie zu verbinden. Auf diese Weise wird die Karosseriesteifigkeit bezüglich der Quer- und Vertikal-Steifigkeit (das heißt Torsionssteifigkeit und/oder Biegesteifigkeit) sowohl statisch als auch dynamisch verbessert.

In einer konkreten technischen Umsetzung kann die Fahrwerksaufhängung ein Vorderachshilfsrahmen sein, der seitlich jeweils mit einem Lenkerverbund mit einem, ein Fahrzeugrad tragenden Radträger angelenkt ist. Die Aggregate-Lagerungskomponente kann bevorzugt ein Tunnelquerträger sein, der einen in einer karosserieseitigen Bodengruppe ausgebildeten Mitteltunnel überbrückt. Die nachfolgenden Erfindungsaspekte werden im Hinblick auf ein einfacheres Verständnis der Erfindung mit Bezug auf die obige konkrete technische Umsetzung erläutert, ohne jedoch ausschließlich darauf beschränkt zu sein.

So kann das Zwischenkopplungselement bevorzugt eine fachwerkartige Versteifungsstruktur mit entsprechend reduziertem Bauteilgewicht aufweisen. Das Zwischenkopplungselement kann zudem in einer ersten Ausführungsvariante materialeinheitlich und/oder einstückig am Hilfsrahmen bzw. am Tunnelquerträger ausgebildet sein. Bevorzugt ist jedoch ein modularer Aufbau, bei dem das Zwischenkopplungselement ein vom Hilfsrahmen und vom Tunnelquerträger separates Bauteil ist. Auf diese Weise sind unterschiedliche Materialkombinationen denkbar, bei denen zum Beispiel alle drei Elemente (das heißt der Hilfsrahmen, das Zwischenkopplungselement sowie der Tunnelquerträger) aus unterschiedlichen Werkstoffen hergestellt ist. Der Tunnelquerträger kann beispielhaft aus einem kurzfaserverstärkten Polymerwerkstoff gefertigt sein, während der Hilfsrahmen aus einem GFK-Werkstoff gefertigt sein kann.

Der Hilfsrahmen kann in an sich gängiger Praxis aus zwei Hilfsrahmenlängsträgern aufgebaut sein, die über Quer- oder Diagonalstreben miteinander verbunden sind. Zudem kann der Hilfsrahmen vordere und hintere Befestigungspunkte zur Anbindung an die Karosserielängsträger aufweisen. Bevorzugt ist das Zwischenkopplungselement an einer hinteren Querstrebe des Hilfsrahmens angebunden. Das Zwischenkopplungselement kann dabei bauraumgünstig mit Bezug auf die fahrzeugäußeren Hilfsrahmenlängsträger um einen Querversatz nach fahrzeuginnen versetzt am Hilfsrahmen angebunden sein.

Bei dem oben spezifizierten modularen Aufbau kann der Tunnelquerträger karosserieseitige Anbindungspunkte zur Anbindung an eine Karosserie-Bodengruppe aufweisen, in der der Mitteltunnel ausgebildet ist. Zudem kann der Tunnelquerträger davon separate Anbindungspunkte zum Anbau des Zwischenkopplungselementes aufweisen.

Im Hinblick auf einen geringen Bauraumbedarf kann das Zwischenkopplungselement mit einem flachen Aufbau versehen sein. Exemplarisch kann das Zwischenkopplungselement ein einschaliges, das heißt einstückiges Blechumformteil sein, das in der Zusammenbaulage in einer in etwa horizontalen Ebene liegt.

Die karosserieseitigen Anbindungspunkte des Tunnelquerträgers ermöglichen eine unmittelbare Anbindung an seitliche Tunnellängsträger, die den Mitteltunnel beidseitig verstärken und die sich in der Fahrzeuglängsrichtung in Richtung auf das Fahrzeugheck erstrecken.

Das Zwischenkopplungselement kann in einer konkreten Umsetzung der Erfindung um einen Höhenversatz unterhalb der in der Karosserie-Bodengruppe ausgebildeten Tunnellängsträger positioniert sein. In einer ersten Variante kann zur Überbrückung dieses Höhenversatzes das Zwischenkopplungselement aus seinem flachen Aufbau bis auf Höhe der Tunnellängsträger hochgezogen sein. In einem solchen Fall müsste das Zwischenkopplungselement eine Z-Form oder eine S-Form aufweisen, um den Höhenversatz Δz zu überbrücken, was jedoch konstruktiv aufwändig ist und auch eine Übertragung von Kollisionskräften in der Fahrzeuglängsrichtung nach hinten beeinträchtigen kann.

Im Hinblick auf eine konstruktiv einfache Gestaltung kann daher in einer zweiten Variante der Höhenversatz alleine mittels des Tunnelquerträgers überbrückt werden. Entsprechend können am Tunnelquerträger die Anbindungspunkte zum Zwischenkopplungselement um einen Höhenversatz unterhalb der karosserieseitigen Anbindungspunkte angeordnet sein. Auf diese Weise ist ein einfacher flacher Aufbau des Zwischenkopplungselementes gewährleistet.

Bevorzugt ist es, wenn die Hilfsrahmenlängsträger in der Fahrzeugquerrichtung mit einer, ein Schubfeld bildenden, insbesondere kreuzförmigen Strebenanordnung verbunden sind. Auf diese Weise wird insbesondere die Quersteifigkeit des Hilfsrahmens erhöht. In diesem Fall kann das Zwischenkopplungselement an einem hinteren Ende der Strebenanordnung angebunden sein. Zur weiteren Erhöhung der Steifigkeit des Hilfsrahmens kann sich eine hintere Querstrebe der Strebenanordnung zwischen den hinteren Karosserielängsträger-Befestigungspunkten des Hilfsrahmens erstrecken. Die hintere Querstrebe kann mit ihren Strebenabschnitten in der Fahrzeuglängsrichtung betrachtet nach vorne an einer mittigen Scheitelstelle V-förmig zusammenlaufen. Auf diese Weise ergibt sich ein Freiraum, in den das Zwischenkopplungselement bauraumgünstig einragen kann.

Für eine stabile sowie steife Anbindung am Hilfsrahmen kann das Zwischenkopplungselement eine kronenartige Außengeometrie aufweisen, wobei die Krone in der Fahrzeuglängsrichtung nach vorne exemplarisch drei Zacken aufweist, von denen jede dreiecksförmige Zacke einen vorderen Anbindungspunkt zu den Koppelstellen des Hilfsrahmen-Schubfeldes darstellt. Von den drei vorderen Anbindungspunkten ist ein mittlerer Anbindungspunkt unmittelbar an der Scheitelstelle der V-förmigen, hinteren Quertrebe positioniert. Die beiden seitlichen Anbindungspunkte können jeweils an den V-förmig zulaufenden Strebenabschnitten der hinteren Querstrebe positioniert sein.

Besonders bevorzugt sind die beiden seitlichen Anbindungspunkte im Nahbereich der Hilfsrahmen-Befestigungspunkte an den Karosserielängsträgern positioniert. Auf diese Weise ergibt sich eine verbesserte lokal-dynamische Steifigkeit im Bereich von Lenkerkonsolen, die jeweils hinten am Hilfsrahmenlängsträger ausgebildet sind.

Bei einem Frontalcrash ergibt sich ein Haupt-Lastpfad, der über die vorderen Karosserielängsträger Aufprallkräfte in die Karosserie-Bodengruppe einleitet. Zudem wird ein Neben-Lastpfad bereitgestellt, der sich über den Hilfsrahmen sowie das Zwischenkopplungselement bis zum Tunnelquerträger und weiter in die Tunnellängsträger erstreckt.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: in einer perspektivischen Ansicht von unten die Karosserielängsträger mit daran angebundenem Hilfsrahmen, der in der Fahrzeuglängsrichtung nach hinten über ein Zwischenkopplungselement kraftübertragend mit einem Tunnelquerträger verbunden ist;

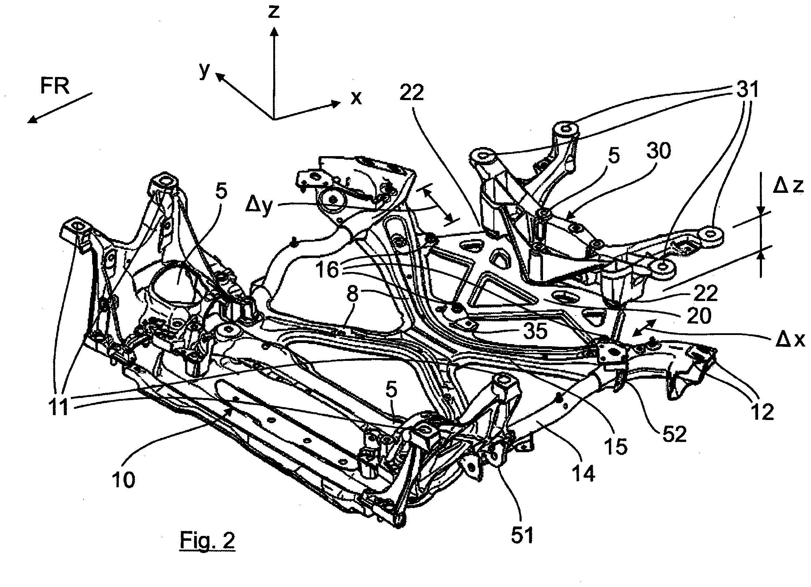

- Fig. 2: in einer perspektivischen Ansicht von oben die Anordnung bestehend aus dem Hilfsrahmen, dem Zwischenkopplungselement sowie dem Tunnelquerträger;
- Fig. 3: die Anordnung in einer Seitenansicht; und
- Fig. 4: in einer Teilansicht den Hilfsrahmen mit daran angebundenen Radführungselementen (das heißt Lenkern) sowie dem Zwischenkopplungselement.

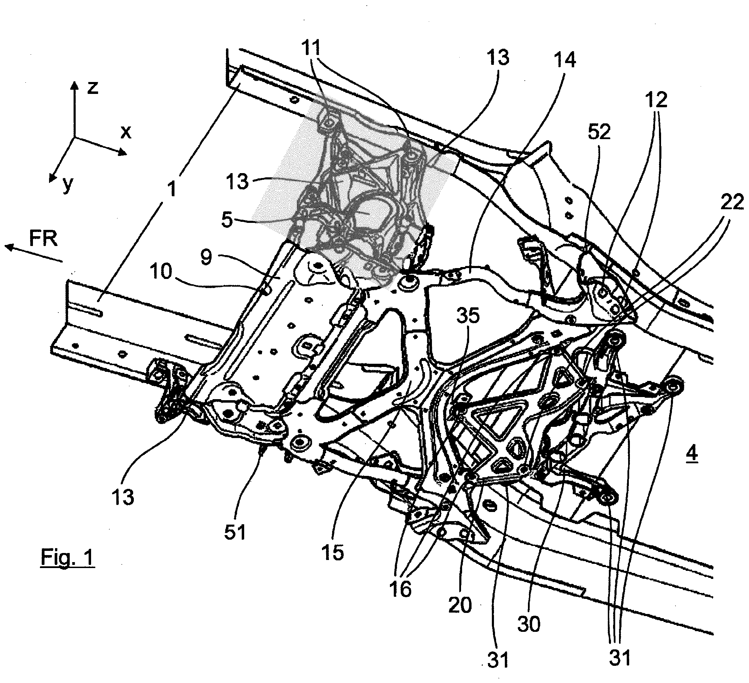

In der Fig. 1 ist die Karosseriestruktur eines Fahrzeug-Vorderwagens insoweit dargestellt, als es für das Verständnis der Erfindung erforderlich ist. Demzufolge weist die Karosseriestruktur zwei sich in der Fahrzeuglängsrichtung x nach hinten erstreckende Karosserielängsträger 1 auf, an denen über vordere Befestigungspunkte 11 und hintere Befestigungspunkte 12 ein Hilfsrahmen 10 (über nicht dargestellte elastische Lager) angebunden ist. Der Hilfsrahmen 10 weist in der Fahrzeuglängsrichtung x zwei einander seitlich gegenüberliegende Hilfsrahmenlängsträger 14 auf, die an vorderen Knotenelementen 13 (zum Beispiel Gussknoten) mittels der vorderen Befestigungspunkte 11 am Karosserielängsträger 1 angebunden sind. Die beiden vorderen Knotenelemente 13 sind über einen vorderen Hilfsrahmenquerträger 9 miteinander verbunden.

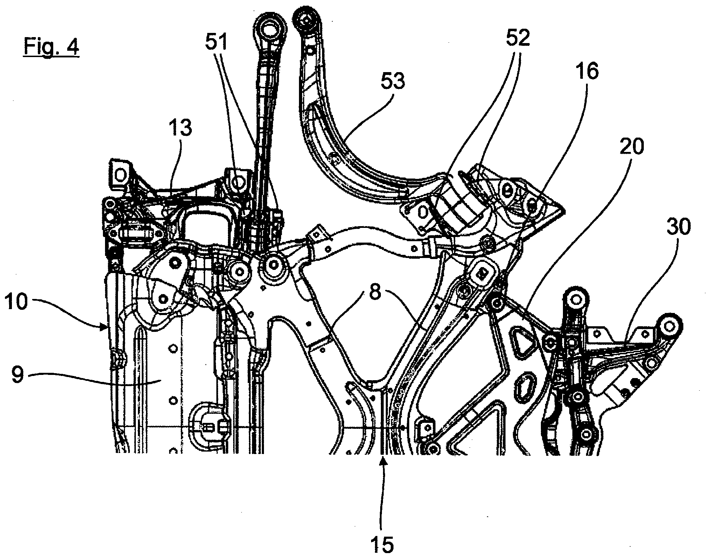

Die hinteren Karosserielängsträger-Befestigungspunkte 12 des Hilfsrahmens 10 sind unmittelbar neben hinteren Lenkerkonsolen 52 ausgebildet, an denen in der Zusammenbaulage ein Querlenker 53 (Fig. 4) angelenkt ist. Entsprechende vordere Lenkerkonsolen 51 sind jeweils unmittelbar in den Knotenelementen 13 angeformt. Zur Aussteifung weist der Hilfsrahmen 10 eine ein Schubfeld bildende kreuzförmige Strebenanordnung 15 auf, deren Strebenabschnitte 8 an einer mittleren Knotenstelle zusammenlaufen und jeweils gegenüberliegend an den vorderen Knotenelementen 13 sowie im Bereich der hinteren Befestigungspunkte 12 der Hilfsrahmenlängsträger 14 angeformt sind.

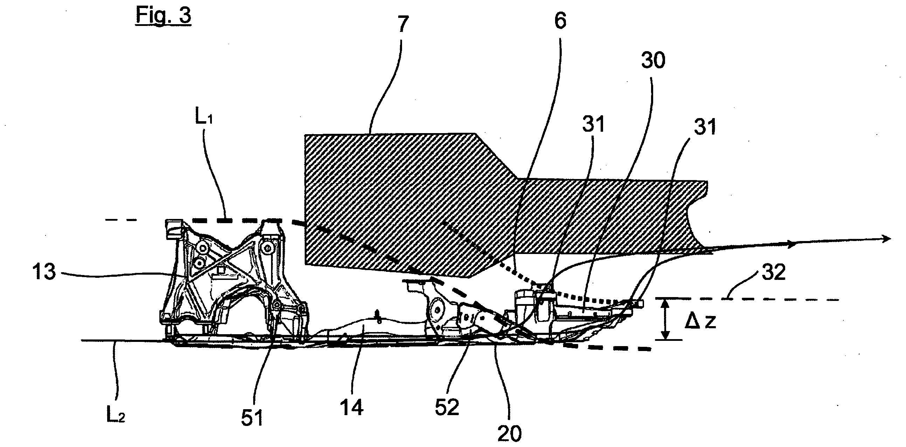

Der Hilfsrahmen 10 bildet zusammen mit einem Tunnelquerträger 30 eine Abstützbasis zur Abstützung eines in der Fig. 3 angedeuteten Antriebsaggregates 7. Das Antriebsaggregat 7 kann in an sich bekannter Weise eine Brennkraftmaschine aufweisen, an der sich in der Fahrzeuglängsrichtung x nach hinten ein Getriebe anschließt. Das Getriebe ragt in einen Mitteltunnel (in der Fig. 3 durch eine punktierte Konturlinie 6 angedeutet) ein, der Bestandteil einer Karosserie-Bodengruppe 4 (Fig. 1) ist und vom Tunnelquerträger 30 in der Fahrzeugquerrichtung y überbrückt ist. Unter Bildung einer Dreipunktlagerung kann das Antriebsaggregat 7 auf zwei vordere seitliche Lagerstellen 5, die in den beiden Knotenelementen 13 des Hilfsrahmens 10 positionierbar sind, sowie auf einer hinteren mittleren Lagerstelle 5 am Tunnelquerträger 30 abgestützt sein.

Wie aus der Fig. 1 weiter hervorgeht, ist der Tunnelquerträger 30 um einen Längsversatz Δx von dem Hilfsrahmen 10 beabstandet. Zwischen dem Hilfsrahmen 10 und dem Tunnelquerträger 30 ist unter Überbrückung dieses Längsversatzes Δx ein Zwischenkopplungselement 20 angeordnet, das den Hilfsrahmen 10 kraftübertragend mit dem Tunnelquerträger 30 verbindet.

Das Zwischenkopplungselement 20 ist im dargestellten Ausführungsbeispiel ein vom Hilfsrahmen 10 und vom Tunnelquerträger 30 separates Bauteil mit einer kronenartigen Außengeometrie. An dieser sind drei vordere Anbindungspunkte 16 ausgebildet, über die das Zwischenkopplungselement 20 an einer hinteren Querstrebe der Strebenanordnung 15 montiert ist. Zudem ist das Zwischenkopplungselement 20 an hinteren Anbindungspunkten 22 am Tunnelquerträger 30 montiert. In den Figuren ist das Zwischenkopplungselement 20 flach aufgebaut und als ein einschaliges Blechumformteil hergestellt, das in der Zusammenbaulage in etwa in einer horizontalen Ebene liegt.

Der Tunnelquerträger 30 ist mit seinen karosserieseitigen Anbindungspunkten 31 unmittelbar an Tunnellängsträgern 32 (in der Fig. 3 ist deren Kontur mit gestrichelter Linie angedeutet) der Karosserie-Bodengruppe 4 angebunden. Die Tunnellängsträger 32 sind gemäß den Figuren um einen Höhenversatz Δz oberhalb des Zwischenkopplungselementes 20 positioniert. Der Höhenversatz Δz wird mittels des Tunnelquerträgers 30 überbrückt. Hierzu weist der Tunnelquerträger 30 Anbindungspunkte 22 zum Anbau des Zwischenkopplungselementes 20 auf, die um den Höhenversatz Δz unterhalb der karosserieseitigen Anbindungspunkte 31 positioniert sind, wodurch in konstruktiv einfacher Weise eine kraftübertragende Verbindung (das heißt ein Lastpfad) zwischen den Karosserielängsträgern 1 und den Tunnellängsträgern 32 bereitstellbar ist.

Wie aus den Figuren weiter hervorgeht, laufen die Strebenabschnitte 8 der hinteren Querstrebe der Strebenanordnung 15 in der Fahrzeuglängsrichtung x nach vorne an einer mittigen Scheitelstelle 35 zusammen. Dadurch ergibt sich ein Freiraum, in den das Zwischenkopplungselement 20 einragt. Das Zwischenkopplungselement 20 ist dabei mit einem mittleren Anbindungspunkt unmittelbar an der Scheitelstelle 35 befestigt, während die beiden seitlich äußeren Anbindungspunkte im Nahbereich der hinteren Lenkerkonsole 52 positioniert sind (Fig. 4).

In der Fig. 3 sind die Lastpfade angedeutet, die sich bei einer Frontalkollisionsfall ergegben. Demzufolge bilden die beiden nur gestrichelt dargestellten Karosserielängsträger 1 einen Hauptlastpfad L₁, über den die Aufprallkräfte in die Bodengruppe 4 der Fahrzeugkarosserie einleitbar sind. Zudem ist ein zusätzlicher Neben-Lastpfad L₂ bereitgestellt, der durch den Hilfsrahmen 10, das Zwischenkopplungselement 20 sowie den Tunnelquerträger 30 und die sich in der Fahrzeuglängsrichtung x nach hinten anschließenden Tunnellängsträger 32 gebildet ist.

## Patentansprüche

1. Zweispuriges Fahrzeug mit einer Fahrwerksaufhängung, mit einem Vorderachshilfsrahmen (10), der an seitlichen Karosserielängsträgern (1) angebunden ist, und mit einem als Antriebsaggregate-Lagerungskomponente wirkenden Tunnelquerträger (30), der in einer Fahrzeuglängsrichtung (x) um einen Längsversatz (Δx) vom Hilfsrahmen (10) beabstandet ist und einen karosserieseitigen Mitteltunnel (6) überbrückt, wobei ein Antriebsaggregat (7) über Lagerstellen (5) sowohl auf dem Hilfsrahmen (10) als auch auf dem Tunnelquerträger (30) abgestützt ist, **dadurch gekennzeichnet, dass** ein Zwischenkopplungselement (20) bereitgestellt ist, das unter Überbrückung des Längsversatzes (Δx) den Hilfsrahmen (10) mit dem Tunnelquerträger (30) kraftübertragend verbindet.

2. Zweispuriges Fahrzeug nach Anspruch 1, **dadurch gekennzeichnet, dass** das Zwischenkopplungselement (20) eine fachwerkartige Versteifungsstruktur aufweist und/oder dass das Zwischenkopplungselement (20) ein vom Hilfsrahmen (10) und vom Tunnelquerträger (30) separates Bauteil ist mit zumindest einem vorderen Anbindungspunkt (16) zur Anbindung an den Hilfsrahmen (10) und mit zumindest einem hinteren Anbindungspunkt (22) zur Anbindung an den Tunnelquerträger (30).

3. Zweispuriges Fahrzeug nach Anspruch 1 oder 2, **dadurch gekennzeichnet, dass** der Hilfsrahmen (10) aus Hilfsrahmenlängsträger (14) aufgebaut ist, die über Quer- und/oder Diagonalstreben miteinander verbunden sind, und/oder dass der Hilfsrahmen (10) vordere und hintere Befestigungspunkte (11, 12) zur Anbindung an die Karosserielängsträger (1) aufweist, und dass das Zwischenkopplungselement (20) mit seinem vorderen Anbindungspunkt (16) mit Bezug auf die Hilfsrahmenlängsträger (14) um einen Querversatz (Δy) nach fahrzeuginnen versetzt am Hilfsrahmen (10) angebunden ist.

4. Zweispuriges Fahrzeug nach einem der vorhergehenden Ansprüche, **dadurch gekennzeichnet, dass** der Tunnelquerträger (30) karosserieseitige Anbindungspunkte (31) zur Anbindung an eine Karosserie-Bodengruppe (4) aufweist, in der der Mitteltunnel (6) ausgebildet ist, und dass der Tunnelquerträger (30) davon separate Anbindungspunkte (22) zum Anbau des Zwischenkopplungselements (20) aufweist.

5. Zweispuriges Fahrzeug nach Anspruch 4, **dadurch gekennzeichnet, dass** am Tunnelquerträger (30) die Anbindungspunkte (22) zum Anbau des Zwischenkopplungselements (20) um einen Höhenversatz (Δz) unterhalb der karosserieseitigen Anbindungspunkte (31) angeordnet sind, und/oder dass in der Zusammenbaulage die Anbau-Anbindungspunkte (22) und die vorderen Anbindungspunkte (16) des Zwischenkopplungselements (20) in der Fahrzeughochrichtung (z) auf gleicher Höhe angeordnet sind.

6. Zweispuriges Fahrzeug nach Anspruch 4, **dadurch gekennzeichnet, dass** die Bodengruppe (4) der Fahrzeugkarosserie Tunnellängsträger (32) aufweist, die den Mitteltunnel (6) beidseitig verstärken, und dass der Tunnelquerträger (30) kraftübertragend an den Tunnellängsträgern (32) angebunden ist.

7. Zweispuriges Fahrzeug nach Anspruch 3, **dadurch gekennzeichnet, dass** die Hilfsrahmenlängsträger (14) in der Fahrzeugquerrichtung (y) mit einer, ein Schubfeld bildenden, kreuzförmigen Strebenanordnung (15) verbunden sind, und dass das Zwischenkopplungselement (20) an einem hinteren Ende der Strebenanordnung (15) angebunden ist.

8. Zweispuriges Fahrzeug nach einem der vorhergehenden Ansprüche, **dadurch gekennzeichnet, dass** das Zwischenkopplungselement (20) einen flachen Aufbau aufweist und/oder ein einstückiges Blechumformteil ist.

9. Zweispuriges Fahrzeug nach Anspruch 6, **dadurch gekennzeichnet, dass** das Zwischenkopplungselement (20) in der Zusammenbaulage vollständig in einer horizontalen Ebene liegt, und/oder dass das Zwischenkopplungselement (20) um einen Höhenversatz (Δz) unterhalb der Tunnellängsträger (32) angeordnet ist, und dass der Höhenversatz (Δz) zwischen dem Zwischenkopplungselement (20) und den Tunnellängsträgern (32) mittels des Tunnelquerträgers (30) überbrückbar ist.

10. Zweispuriges Fahrzeug nach Anspruch 3 **dadurch gekennzeichnet, dass** die Hilfsrahmenlängsträger (14) an den hinteren Befestigungspunkten (12) zu den Karosserielängsträgern (1) mit einer hinteren Querstrebe verbunden sind, und das die hintere Querstrebe mit ihren Strebenabschnitten (8) in der Fahrzeuglängsrichtung (x) nach vorne an einer Scheitelstelle (35) V-förmig zusammenlaufen, und zwar unter Bildung eines Freiraums, in den das Zwischenkopplungselement (20) einragt.

11. Zweispuriges Fahrzeug nach Anspruch 10, **dadurch gekennzeichnet, dass** das Zwischenkopplungselement (20) insgesamt drei vordere Anbindungspunkte (16) aufweist, von denen ein mittlerer Anbindungspunkt an der Scheitelstelle (35) der hinteren Querstrebe positioniert ist und die seitlichen Anbindungspunkte an den V-förmig zulaufenden Strebenabschnitten (8) der hinteren Querstrebe positioniert sind, und zwar im Nahbereich einer am Hilfsrahmen (10) ausgebildeten Lenkerkonsole (52).

## Claims

1. Two-lane vehicle having a chassis suspension, having a front axle subframe (10) which is attached to lateral body side members (1), and having a tunnel cross member (30) functioning as a drive unit bearing component, said tunnel cross member being spaced apart from the subframe (10) by a longitudinal displacement (Δx) in a vehicle longitudinal direction (x) and bridging a body-side central tunnel (6), wherein a drive unit (7) is supported via bearing positions (5) both on the subframe (10) and on the tunnel cross member (30), **characterised in that** an intermediate coupling element (20) is provided which connects the subframe (10) to the tunnel cross member (30) in a force-transmitting manner by bridging of the longitudinal displacement (Δx).

2. Two-lane vehicle according to claim 1, **characterised in that** the intermediate coupling element (20) has a framework-type reinforcement structure and/or the intermediate coupling element (20) is a separate component to the subframe (10) and to the tunnel cross member (30) having at least one front attachment point (16) for attaching to the subframe (10) and having at least one rear attachment point (22) for attaching to the tunnel cross member (30).

3. Two-lane vehicle according to claim 1 or 2, **characterised in that** the subframe (10) is constructed from subframe side members (14) which are connected to one another via cross and/or diagonal braces, and/or the subframe (10) has front and rear fastening points (11, 12) for attaching to the body side members (1), and the intermediate coupling element (20) is attached to the subframe (10) with its front attachment point (16) displaced towards the vehicle interior by a transverse displacement (Δy) with respect to the subframe side members (14).

4. Two-lane vehicle according to any one of the preceding claims, **characterised in that** the tunnel cross member (30) has body-side attachment points (31) for attaching to a body floor assembly (4) in which the central tunnel (6) is formed, and the tunnel cross member (30) has separate attachment points (22) thereto for constructing the intermediate coupling element (20).

5. Two-lane vehicle according to claim 4, **characterised in that** the attachment points (22) are arranged on the tunnel cross member (30) underneath the body-side attachment points (31) by a vertical displacement (Δz) for constructing the intermediate coupling element (20), and/or, in the assembly location, the construction attachment points (22) and the front attachment points (16) of the intermediate coupling element (20) are arranged at the same height in the vehicle vertical direction (z).

6. Two-lane vehicle according to claim 4, **characterised in that** the floor assembly (4) of the vehicle body has tunnel side members (32) which reinforce the central tunnel (6) on both sides, and the tunnel cross member (30) is attached to the tunnel side members (32) in a force-transmitting manner.

7. Two-lane vehicle according to claim 3, **characterised in that** the subframe side members (14) are connected to a cross-shaped brace arrangement (15) forming a shear area in the vehicle transverse direction (y), and the intermediate coupling element (20) is attached to a rear end of the brace arrangement (15).

8. Two-lane vehicle according to any one of the preceding claims, **characterised in that** the intermediate coupling element (20) has a flat construction and/or is a single-piece sheet metal formed part.

9. Two-lane vehicle according to claim 6, **characterised in that** the intermediate coupling element (20) lies completely in a horizontal plane in the assembly location, and/or the intermediate coupling element (20) is arranged underneath the tunnel side members (32) by a vertical displacement (Δz), and the vertical displacement (Δz) is able to be bridged between the intermediate coupling element (20) and the tunnel side members (32) by means of the tunnel cross member (30).

10. Two-lane vehicle according to claim 3, **characterised in that** the subframe side members (14) are connected to a rear cross brace at the rear fastening points (12) with respect to the body side members (1), and the rear cross braces intersect in a V-shape at an apex point (35) forwards with their brace sections (8) in the vehicle longitudinal direction (x), forming a clearance into which the intermediate coupling element (20) projects.

11. Two-lane vehicle according to claim 10, **characterised in that** the intermediate coupling element (20) has in total three front attachment points (16), of which a central attachment point is positioned at the apex point (35) of the rear cross brace and the lateral attachment points are positioned at the brace sections (8) of the rear cross braces intersecting in a V-shape, and in the vicinity of a steering console (52) formed on the subframe (10).

## Revendications

1. Véhicule à deux traces avec une suspension de mécanisme de roulement, avec un cadre auxiliaire d'essieu avant (10), qui est raccordé aux poutres longitudinales de carrosserie (1), et avec une poutre transversale de tunnel (30) agissant en tant que composant de support de groupe d'entraînement, qui est espacée du cadre auxiliaire (10) avec un décalage longitudinal (Δx) dans une direction longitudinale du véhicule (x) et chevauche un tunnel central côté carrosserie (6), dans lequel un groupe d'entraînement (7) est soutenu par le biais de paliers (5) aussi bien sur le cadre auxiliaire (10) que sur la poutre transversale de tunnel (30), **caractérisé en ce qu'**un élément de couplage intermédiaire (20) est mis à disposition, qui relie le cadre auxiliaire (10) à la poutre transversale de tunnel (30) avec transmission de force par chevauchement du décalage longitudinal (Δx).

2. Véhicule à deux traces selon la revendication 1, **caractérisé en ce que** l'élément de couplage intermédiaire (20) présente une structure de rigidification de type charpente et/ou que l'élément de couplage intermédiaire (20) est un composant séparé du cadre auxiliaire (10) et de la poutre transversale de tunnel (30) avec au moins un point de raccordement avant (16) pour le raccordement au cadre auxiliaire (10) et avec au moins un point de raccordement arrière (22) pour le raccordement à la poutre transversale de tunnel (30).

3. Véhicule à deux traces selon la revendication 1 ou 2, **caractérisé en ce que** le cadre auxiliaire (10) est constitué de poutres longitudinales de cadre auxiliaire (14), qui sont reliés l'un à l'autre par le biais d'entretoises transversales et/ou diagonales, et/ou que le cadre auxiliaire (10) présente des points de fixation avant et arrière (11, 12) pour le raccordement aux poutres longitudinales de carrosserie (1), et que l'élément de couplage intermédiaire (20) est raccordé avec son point de raccordement avant (16) de manière décalée vers l'intérieur de véhicule avec un décalage transversal (Δy) par rapport aux poutres longitudinales de cadre auxiliaire (14) au niveau du cadre auxiliaire (10).

4. Véhicule à deux traces selon l'une quelconque des revendications précédentes, **caractérisé en ce que** la poutre transversale de tunnel (30) présente des points de raccordement côté carrosserie (31) pour le raccordement à un groupe de plancher de carrosserie (4), dans lequel le tunnel central (6) est réalisé, et que la poutre transversale de tunnel (30) présente des points de raccordement (22) qui en sont séparés pour le montage de l'élément de couplage intermédiaire (20).

5. Véhicule à deux traces selon la revendication 4, **caractérisé en ce que** les points de raccordement (22) sont agencés au niveau de la poutre transversale de tunnel (30) pour le montage de l'élément de couplage intermédiaire (20) avec un décalage en hauteur (Δz) sous les points de raccordement côté carrosserie (31), et/ou que dans la position d'assemblage, les points de raccordement de montage (22) et les points de raccordement avant (16) de l'élément de couplage intermédiaire (20) sont agencés à la même hauteur dans le sens de la hauteur du véhicule (z).

6. Véhicule à deux traces selon la revendication 4, **caractérisé en ce que** le groupe de plancher (4) de la carrosserie de véhicule présente des poutres longitudinales de tunnel (32), qui renforcent le tunnel central (6) des deux côtés, et que la poutre transversale de tunnel (30) est raccordée avec transmission de force aux poutres longitudinales de tunnel (32).

7. Véhicule à deux traces selon la revendication 3, **caractérisé en ce que** les poutres longitudinales de cadre auxiliaire (14) sont reliés dans la direction transversale du véhicule (y) à un agencement d'entretoise (15) cruciforme, formant un champ de poussée, et que l'élément de couplage intermédiaire (20) est raccordé au niveau d'une extrémité arrière de l'agencement d'entretoise (15).

8. Véhicule à deux traces selon l'une quelconque des revendications précédentes, **caractérisé en ce que** l'élément de couplage intermédiaire (20) présente une structure plate et/ou est une pièce de tôle d'un seul tenant.

9. Véhicule à deux traces selon la revendication 6, **caractérisé en ce que** l'élément de couplage intermédiaire (20) se trouve entièrement dans un plan horizontal dans la position d'assemblage, et/ou que l'élément de couplage intermédiaire (20) est agencé avec un décalage en hauteur (Δz) sous les poutres longitudinales de tunnel (32), et que le décalage en hauteur (Δz) entre l'élément de couplage intermédiaire (20) et les poutres longitudinales de tunnel (32) peut être chevauché au moyen de la poutre transversale de tunnel (30).

10. Véhicule à deux traces selon la revendication 3, **caractérisé en ce que** les poutres longitudinales de cadre auxiliaire (14) sont reliés au niveau des points de fixation arrière (12) avec les poutres longitudinales de carrosserie (1) à une entretoise transversale arrière, et que l'entretoise transversale arrière avec ses sections d'entretoise (8) convergent en forme de V dans la direction longitudinale du véhicule (x) vers l'avant au niveau d'un point sommital (35), et ce en formant un espace libre, dans lequel pénètre l'élément de couplage intermédiaire (20).

11. Véhicule à deux traces selon la revendication 10, **caractérisé en ce que** l'élément de couplage intermédiaire (20) présente en tout trois points de raccordement avant (16), dont un point de raccordement central est positionné au niveau du point sommital (35) de l'entretoise transversale arrière et les points de raccordement latéraux sont positionnés au niveau des sections d'entretoise (8) convergeant en forme de V de l'entretoise transversale arrière, et ce à proximité d'une console de bras (52) réalisée au niveau du cadre auxiliaire (10).
